# EUROPEAN PATENT APPLICATION

(11) **EP 4 521 208 A1**
(43) Date of publication of application: **12.03.2025**
(21) Application number: 24194906.4
(22) Date of filing: 16.08.2024
(51) Int. Cl.: G06F 3/01, G06F 3/023, B60W 50/14, G06F 16/632

(54) **IN-VEHICLE HUMAN-COMPUTER INTERACTION METHOD AND VEHICLE**

(30) Priority: 07.09.2023 CN 202311153242
(71) Applicant: Bayerische Motoren Werke Aktiengesellschaft, 80809 München (DE)
(72) Inventor: Yang, Xiaofei, Beijing 101318 (CN)

(57) **Abstract**

The invention provides an in-vehicle human-computer interaction method and a vehicle, wherein the method comprises detecting user's tapping actions via sensors integrated in a vehicle; and playing, in response to detecting a user's tapping action, music corresponding to the tapping action in the vehicle. According to another aspect of the present invention, the method may comprise providing a rhythm game to a user via a multimedia system of a vehicle; detecting the user's tapping actions via sensors integrated in the vehicle; and displaying an evaluation corresponding to the tapping action in the rhythm game based on the detected tapping action of the user.

## Description

### FIELD OF THE INVENTION

The present invention relates to a vehicle, and more particularly to an in-vehicle human-computer interaction method for a vehicle.

### BACKGROUND OF THE INVENTION

Nowadays, vehicles are widely used by people. The on-board multimedia systems of vehicles are the most commonly used function for most users during travelling of the vehicles, for example, users can play their favorite music or listen to radio. In addition, more and more vehicles provide video playback, gaming entertainment and other functions through one or more screens arranged in the vehicle. Therefore, the functionality and fun of the multimedia systems or entertainment systems of vehicles have attracted more and more attention from users, and have become an important factor to improve user experience and enhance market competitive advantages.

### SUMMARY OF THE INVENTION

The present summary is provided to introduce some concepts that will be further described in the following specific embodiments in a simplified form. The present summary is not intended to identify the key features or essential features of the subject matter required to be protected, nor is it intended to help determine the scope of the subject matter required to be protected.

The invention provides a brand-new in-vehicle human-computer interaction approach, which can detect user's tapping actions subconsciously reflecting music rhythms in vehicles, and play music corresponding to the tapping actions in vehicles. This interactive approach can create pleasant surprises for users and increase fun during vehicle use. In addition, newly equipped sensors in the vehicle that can detect user's tapping actions can also be used to provide users with in-vehicle rhythm game playing experience through entertainment systems.

According to one aspect of the present invention, an in-vehicle human-computer interaction method is provided, comprising detecting user's tapping actions via sensors integrated in a vehicle; and playing, in response to detecting a user's tapping action, music corresponding to the tapping action in the vehicle.

According to a further embodiment of the present invention, the user's tapping actions include any one or more of the following: user tapping on a steering wheel; user tapping on a seat armrest; or user tapping on a door armrest.

According to a further embodiment of the present invention, playing, in response to detecting the user's tapping action, music corresponding to the tapping action in the vehicle further comprises: determining a rhythm of the detected tapping action; searching for music corresponding to the tapping action based at least in part on the determined rhythm; and playing the music corresponding to the tapping action according to a search result.

According to a further embodiment of the present invention, playing the music corresponding to the tapping action according to the search result further comprises: in response to that music matching the rhythm is searched out, using the matched music as the search result; in response to that no music matching the rhythm is searched out, using music closest to the rhythm as the search result; or in response to that no music matching the rhythm is searched out, not playing any music.

According to a further embodiment of the present invention, playing, in response to detecting the user's tapping action, music corresponding to the tapping action in the vehicle further comprises: determining force of the detected tapping action, and the music corresponding to the tapping action is searched for based at least in part on the rhythm and the force of the tapping action.

According to a further embodiment of the present invention, searching for music corresponding to the tapping action based at least in part on the determined rhythm further comprises: sending the determined rhythm to a communicatively coupled music database, wherein the music database stores therein music and rhythm data associated with the music; and receiving the search result from the music database.

According to a further embodiment of the present invention, further comprising: recognizing an identity of the user performing the detected tapping action; obtaining user music preference information from a user profile corresponding to the identity of the user; and searching for the music corresponding to the tapping action based at least in part on the user music preference information and the detected tapping action of the user.

According to a further embodiment of the present invention, playing music corresponding to the tapping action in the vehicle further comprises playing in any one of the following modes: playing from the beginning of a complete media file of the music; playing from the beginning of a segment corresponding to the rhythm tapped by the user; or while the user continues to tap, playing from a music segment that the user is currently tapping.

According to another aspect of the present invention, an in-vehicle human-computer interaction is provided, comprising: providing a rhythm game to a user via a multimedia system of a vehicle; detecting the user's tapping actions via sensors integrated in the vehicle; and displaying an evaluation corresponding to the tapping action in the rhythm game based on the detected tapping action of the user.

According to yet another aspect of the present invention, a vehicle is provided, comprising: one or more sensors for detecting a user's tapping action; a processing unit configured to search for music corresponding to the tapping action according to the detected tapping action; and a multimedia system for playing the searched music.

According to a further embodiment of the present invention, the sensors include one or more of the following sensors: sensors integrated in a steering wheel of the vehicle; sensors integrated in a seat armrest of the vehicle; sensors integrated in a door armrest of the vehicle; an image capture device installed in a cabin of the vehicle; and an audio collection device installed in the cabin of the vehicle.

According to a further embodiment of the present invention, the one or more sensors are further configured to determine a rhythm of the detected tapping action, and the processing unit is configured to search for music corresponding to the tapping action base at least in part on the determined rhythm.

According to a further embodiment of the present invention, the processing unit is further configured to: in response to that music matching the rhythm is searched out, use the matched music as the search result; in response to that no music matching the rhythm is searched out, use music closest to the rhythm as the search result; or in response to that no music matching the rhythm is searched out, not play any music.

According to a further embodiment of the present invention, the one or more sensors are further configured to determine force of the tapping action, and the processing unit is configured to search for the music corresponding to the tapping action based at least in part on the rhythm and the force of the tapping action.

According to a further embodiment of the present invention, the multimedia system is further configured to play in any one of the following modes: playing from the beginning of a complete media file of the music; playing from the beginning of a segment corresponding to the rhythm tapped by the user; or while the user continues to tap, playing from a music segment that the user is currently tapping.

These and other features and advantages will become apparent by reading the following detailed description and referring to the associated accompanying drawings. It should be understood that the foregoing summary of the invention and the following detailed description are merely illustrative and are not intended to limit the claimed aspects.

### BRIEF DESCRIPTION OF THE DRAWINGS

To well understand the above features of the present invention in details, reference can be made to various embodiments, so as to describe the summary of the invention above more specifically, some aspects of which are depicted in the accompanying drawings. However, it should be noted that the accompanying drawings only show some typical aspects of the present invention, and thus should not be considered as limiting the scope of the present invention, because this description may allow other equivalent aspects.
Fig. 1 is an exemplary flowchart of an in-vehicle human-computer interaction method according to one embodiment of the present invention.
Fig. 2 is an exemplary flowchart of an in-vehicle human-computer interaction method according to another embodiment of the present invention.
Figs. 3(a) and 3(b) are schematic diagrams of different arrangements of tapping areas according to different embodiments of the present invention.
Fig. 4 is a schematic diagram of a logical structure of a vehicle according to one embodiment of the present invention.

### DETAILED DESCRIPTION

The present invention will be described in detail below in conjunction with the accompanying drawings, and the characteristics of the present invention will be further shown in the following detailed description. However, it will be appreciated that the present invention can be implemented in a variety of other ways different from those described herein, and that one skilled in the art can make similar generalizations without departing from the connotations of the present invention, so that the present invention is not limited by the detailed descriptions disclosed below.

The expression "and/or" is used herein to include at least one of the components listed before and after the expression. The singular form herein also includes the plural, unless specifically mentioned in the wording. Further, components, steps, operations, and elements used herein to refer to "include" or "comprise" mean the presence or addition of at least one other components, steps, operations, and elements.

Many users have a habit of listening to music through in-vehicle multimedia systems (or "entertainment systems") while driving or riding in a vehicle. In addition, many users may hum songs from time to time during traveling, with tapping steering wheels or armrests, or just tap, especially when they are bored by vehicles waiting for red lights or traffic congestion. If matched music can be recognized according to a rhythm of user's tapping when the user is tapping, and automatically played in the vehicle, it can effectively relieve user's boredom and significantly improve fun of vehicle use.

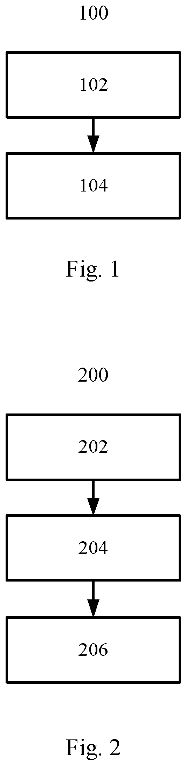

Fig. 1 is an exemplary flowchart of an in-vehicle human-computer interaction method 100 according to one embodiment of the present invention. As shown in Fig. 1, the method 100 begins at step 102 by detecting user's tapping actions via sensors integrated in a vehicle. In general, users who like to tap music rhythm are usually drivers, and in most cases they tap on a steering wheel or a door armrest or an armrest between a driver's seat and a copilot's seat. Thus, as a non-limiting example, sensors may be integrated within steering wheels and armrests. However, it can be appreciated that sensors for detecting user's tapping actions may also be arranged at any other suitable position in a vehicle or at any position that users may tap. Correspondingly, users for whom tap detection is supported are not limited to drivers of vehicles, but are applicable to passengers riding in any position in vehicles. The sensors may be existing sensors with force sensing functionality. Such sensors may sense a tap by the user, and preferably, be able to sense force of the tap.

Subsequently, in step 104, in response to detecting a user's tapping action, music corresponding to the tapping action is played in the vehicle. As previously exemplified, the user's tapping actions may include user tapping on a steering wheel, tapping on a seat armrest, tapping on a door armrest, or tapping on other interior components in the vehicle. In one example, when such a tapping action is detected, recognition of a tap, more specifically, whether the tap corresponds to a piece of music, may be initiated.

Optionally, the sensors may be configured to be able to distinguish whether a user's touch of the steering wheel or armrest is a tap implying a music rhythm (hereinafter referred to as a "music rhythm tap").The recognition can be assisted by, for example, force of a tap, number and frequency of successive taps, etc. As a non-limiting example, it is possible to collect tapping force, number and frequency on a steering wheel when a user is tapping a rhythm, and tapping force, number and frequency when operating steering wheel keys or expressing impatient emotions for example. Then, by analyzing the two types of tapping as samples, a threshold standard for discrimination may be formulated. Alternatively, a rhythm tapping discrimination model may be established through machine learning technology. Thus, respective interaction can be initiated only when it is clearly recognized that the user's tapping is tapping a music rhythm with a high probability, such as searching and playing matched music, which will be further described in detail below. This is beneficial to save resources, including computing resources and communication bandwidth resources, etc., consumed in handling this interactive process.

As an example, in response to detecting music rhythmic tap, the rhythm of the detected tapping actions may be determined. It can be understood that in the field of music, a rhythm refers to a relative relationship of time intervals between multiple taps. A single tap or even two or three independent taps cannot constitute rhythm in the sense of music. Therefore, distinguishable and meaningful music rhythmic tap generally consists of multiple taps in succession over a period of time. When such tapping actions are detected, structured data indicating the rhythm of the period of tapping (hereinafter referred to as "rhythm data") can be converted by calculating time intervals between each tap with time information of each tap in the period of tapping detected by the sensors.

Subsequently, music corresponding to the tapping actions may be searched based at least in part on the determined rhythm. As an example, rhythm data corresponding to the tapping actions may be sent to a music database communicatively coupled to the vehicle to search for music matching the rhythm therein. A large number of music and rhythm data respectively associated with each music may be stored in the music database. It can be understood that the rhythm data is used in the music database as one of a plurality of keys that can be used to search for music, similar to the title, artist, album, genre, ID, and the like of music.

The rhythm data in the music database may be obtained by performing rhythm data extraction on at least a portion of music stored in the base, which may be performed automatically by, for example, analysis of audio data. Optionally, in order to save the process and time of extracting rhythm data, and to speed up search speed and efficiency, rhythm data may be extracted for only a part of the segments of each music, and these segments may be the most representative segments of the music or the segments with the most widespread circulation.

The music database may compare the rhythm data submitted for search with the rhythm data stored in the base, and returning a search result to the vehicle that submitted the request. The search may or may not retrieve matching music. It can be understood that since the submitted rhythm data is derived from manual tapping from a user, appropriate fuzz can be added during the search to increase the likelihood of a hit. When a matching music is searched out, the matching music may be returned to the vehicle as a search result. In one example, the music database is from the same service provider as the music service, in which case the music database may return a media file matching the music to the vehicle for local playback. Alternatively, in the case that the music database and the music service come from different service providers, the music database may also return only identification information of the matching music to the vehicle, and the vehicle may obtain a media file of the music from other data sources based on the identification information.

According to the search result, the music corresponding to the tapping actions is played in the vehicle. In one example, playing music may be performed by invoking a music service in a multimedia system of the vehicle by playing audio through speakers of the vehicle, and displaying related music information on an in-vehicle screen. It can be understood that playing music may also include playing a video file associated with the matching music.

In one non-limiting example, playback of the matching music may be a full playback, i.e. a media file of the music is played from the beginning, or playback may be started from the beginning of a music segment corresponding to a rhythm tapped by the user. As another optional example, in the case that the user continues to tap, the music segment may be aligned with the rhythm of the user's tap and then played from the music segment currently tapped by the user.

In the case that no music matching the rhythm is searched out, music closest to the rhythm can be used as the search result. The music can have a rhythm similar to the rhythm of the user's tap, so there is a high probability that the user will also like this music. Alternatively, when no music matching the rhythm is searched out, no music can be played, so as not to disturb the user.

In addition to the rhythm of tap, other factors can be further combined to facilitate the recognition of matching music. As an optional example, the rhythm of tap can be combined with force of each tap to judge. From the perspective of music, the beats contained in a segment usually show different strong and weak relationship, and this strong and weak relationship can correspond to the force of tap. Therefore, the same rhythm type, combined with different strong and weak beat relationships, can effectively distinguish different music.

In addition, in order to further improve the accuracy and search efficiency of music recognition, it is possible to try to obtain an identity of the user while detecting the user's tapping action. For example, face recognition can be performed by an image capture device (e.g., a camera) in the vehicle. Alternatively, recognition can also be performed by other biometric technologies, such as determining the user's identity when the user unlocks the vehicle through a fingerprint, or voiceprint recognition when the user interacts with the vehicle's voice assistant, and the like. After recognizing an identity of the user, an attempt can be made to obtain the user's music preference from a user profile of the user. This music preference may be entered by the user in the user profile, may be recorded by the user in one or more music services that the user has used, or may be inferred from the user's music playback history. A music preference may indicate music genres that the user likes, favorite artists, music that has been listened to, and the like. Thus, based on the music preference, a range for searching music can be narrowed, or a plurality of matching results can be filtered and sorted. Similarly, the audio produced by the user while making the tapping action can also be collected by an audio collection device (such as a microphone or microphone array) in the vehicle, the audio may be a humming of a music corresponding to the rhythm of tap, so it can also be used as auxiliary information to recognize the music that the user is tapping.

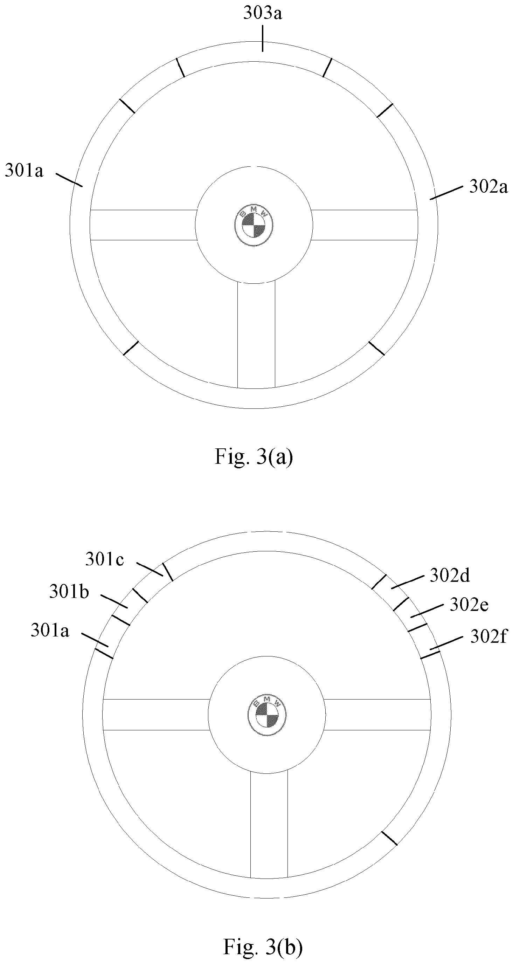

In addition to recognizing the music corresponding to the user's tapping rhythm, the present invention may also provide other forms of human-computer interaction. Fig. 2 is an exemplary flowchart of an in-vehicle human-computer interaction method according to another embodiment of the present invention. As shown in Fig. 2, method 200 begins at step 202 by providing a rhythm game to a user via a multimedia system of a vehicle. A rhythm game is a kind of music video game that is favored by users and is used to provide play experience that simulates the performance of musical instruments, such as piano, guitar, drums, etc. The way this type of game is played is to present a moving mark on a screen, and the user is prompted to click a corresponding input when the mark moves to a tap area, and then the system gives an evaluation according to a distance between a position corresponding to the user's tap time and the tap area, such as "perfect", "good", "miss" and so on. According to one example of the present invention, an application of a rhythm game may be installed in an in-vehicle entertainment system. When the user opens the application, the game may provide a similar playing process to the user as on PCs or on game consoles. The difference is that the game may additionally prompts the user how to provide input. For example, the user may be prompted to provide a plurality of corresponding key inputs by tapping different positions on the steering wheel, such as, as shown in Fig. 3(a), tap areas 301a and 302a are arranged on the left and right sides of the steering wheel while a tap area 303a directly above, which may provide key inputs of e.g. a drumming rhythm game. In an example of Fig. 3(b), three tap areas 301b-306b, which are smaller than those in Fig. 3(a), are arranged on the left and right sides of the steering wheel, and key inputs of e.g. a piano rhythm game can be provided. It is contemplated that Figs. 3(a) and 3(b) are only examples, more or less number of tap areas and tap areas on different positions may be arranged as required, and as described previously, the tap areas may also be provided at various positions convenient for users to tap, such as a door armrest, a seat armrest.

In step 304, user's tapping actions are detected via sensors integrated in a vehicle.

As previously described, the user is prompted to provide game input by tapping in an area where the sensors are installed, and the respective sensors detect the user's tapping action during the game, and converts the detected input into the game required parameters, such as tap timing, position, force, etc.

In step 306, based on the detected tapping action of the user, an evaluation corresponding to the tapping action is displayed in the rhythm game. After receiving the parameters associated with the tapping action detected and recorded by the sensors, the game program can give an evaluation of the tapping action in the game, such as a score, so that the user can obtain a similar or even more interesting gaming experience in the vehicle as on PCs or on game consoles.

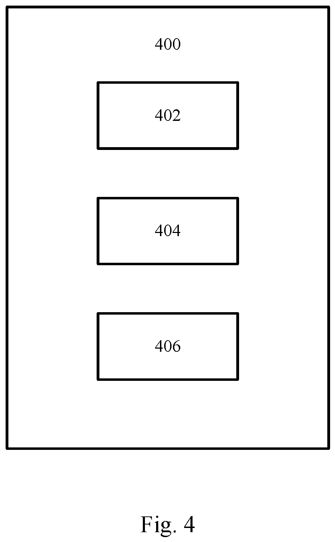

Fig. 4 is a schematic diagram of a logical structure of a vehicle 400 according to one embodiment of the present invention. The vehicle 400 may be any type of motor vehicle, such as a small passenger vehicle, a sport utility vehicle (SUV), a passenger car, a van, etc., and includes vehicles of various powers, such as electric vehicles, plug-in hybrid electric vehicles, hydrogen-powered vehicles, hybrid vehicles, and other alternative fuel vehicles. Herein, a hybrid vehicle is a vehicle having two or more power sources, for example, a vehicle having both gasoline power and electric power.

The vehicle 400 may include one or more sensors 402, a processing unit 404, and a multimedia system 406.The sensors 402 are used to detect a user's tapping action. As previously described, the sensors may be arranged in different positions as needed, including but not limited to integrated in a steering wheel of the vehicle, integrated in a seat armrest or door armrest of the vehicle, and may further include image capture device and/or audio collection device installed in a cabin of the vehicle for user identification or voice collection to facilitate detection and rhythm recognition of tapping actions.

The processing unit 404 is configured to search for music corresponding to the tapping action based on the tapping action detected by the sensors 402.According to one embodiment of the present disclosure, the sensors 402 are further configured to determine a rhythm of the detected tapping action. Accordingly, the processing unit 404 is configured to search for music corresponding to the tapping action based at least in part on the determined rhythm. According to further embodiment of the present disclosure, the sensors are further configured to determine a force of the detected tapping action. Accordingly, the processing unit 404 is configured to search for music corresponding to the tapping action based at least in part on the rhythm and force of the tapping action. In addition, the processing unit 404 is also configured to execute a music application, a game application (such as a music rhythm game described previously), or other application installed in an on-board system of the vehicle.

The multimedia system 406 may include one or more screens, a speaker system, a microphone system, or other devices that may be used to provide in-vehicle audio and video and entertainment in a cabin of the vehicle. The multimedia system 406 is configured to play the searched music. As previously described, the processing system 404 may play an audio file or a video file of the music through the multimedia system 406 when it searches out a result that matches the user's tapping action. Playback can be played in any one of the following modes: playing from the beginning of a complete media file of the music; playing from the beginning of a segment corresponding to the rhythm tapped by the user; or while the user continues to tap, playing from a music segment that the user is currently tapping. According to another embodiment of the present disclosure, the multimedia system 406 may be configured to provide a rhythmic game.

The content already described above includes examples of various aspects of the subject matter required to be protected. Of course, it is impossible to describe every conceivable combination of components or methods for the purpose of describing the required protection subject, but those of ordinary skill in the art should recognize that many further combinations and arrangements of the required protection subject are possible. Thus, the subject matter disclosed is intended to cover all such changes, modifications and changes falling within the spirit and scope of the appended claims.

## Claims

1. An in-vehicle human-computer interaction method, comprising:
detecting user's tapping actions via sensors integrated in a vehicle; and
playing, in response to detecting a user's tapping action, music corresponding to the tapping action in the vehicle.

2. The in-vehicle human-computer interaction method according to claim 1, wherein the user's tapping actions include any one or more of the following:
user tapping on a steering wheel;
user tapping on a seat armrest; or
user tapping on a door armrest.

3. The in-vehicle human-computer interaction method according to claim 1, wherein playing, in response to detecting the user's tapping action, music corresponding to the tapping action in the vehicle further comprises:
determining a rhythm of the detected tapping action;
searching for music corresponding to the tapping action based at least in part on the determined rhythm; and
playing the music corresponding to the tapping action according to a search result.

4. The in-vehicle human-computer interaction method according to claim 3, wherein playing the music corresponding to the tapping action according to the search result further comprises:
in response to that music matching the rhythm is searched out, using the matched music as the search result;
in response to that no music matching the rhythm is searched out, using music closest to the rhythm as the search result; or
in response to that no music matching the rhythm is searched out, not playing any music.

5. The in-vehicle human-computer interaction method according to claim 3, playing the music corresponding to the tapping action according to the search result further comprises determining force of the tapping action, and the music corresponding to the tapping action is searched for based at least in part on the rhythm and the force of the tapping action.

6. The in-vehicle human-computer interaction method according to claim 3, wherein searching for music corresponding to the tapping action based at least in part on the determined rhythm further comprises:
sending the determined rhythm to a communicatively coupled music database, wherein the music database stores therein music and rhythm data associated with the music; and
receiving the search result from the music database.

7. The in-vehicle human-computer interaction method according to claim 1, further comprising:
recognizing an identity of the user performing the detected tapping action;
obtaining user music preference information from a user profile corresponding to the identity of the user; and
searching for the music corresponding to the tapping action based at least in part on the user music preference information and the detected tapping action of the user.

8. The in-vehicle human-computer interaction method according to claim 1, wherein playing music corresponding to the tapping action in the vehicle further comprises playing in any one of the following modes:
playing from the beginning of a complete media file of the music;
playing from the beginning of a segment corresponding to the rhythm tapped by the user; or
while the user continues to tap, playing from a music segment that the user is currently tapping.

9. An in-vehicle human-computer interaction method, comprising:
providing a rhythm game to a user via a multimedia system of a vehicle;
detecting user's tapping actions via sensors integrated in a vehicle; and
displaying an evaluation corresponding to the tapping action in the rhythm game based on the detected tapping action of the user.

10. A vehicle comprising:
one or more sensors for detecting a user's tapping action;
a processing unit configured to search for music corresponding to the tapping action according to the detected tapping action; and
a multimedia system for playing the searched music.

11. The vehicle according to claim 10, wherein the sensors include one or more of the following sensors:
sensors integrated in a steering wheel of the vehicle;
sensors integrated in a seat armrest of the vehicle;
sensors integrated in a door armrest of the vehicle;
an image capture device installed in a cabin of the vehicle; and
an audio collection device installed in the cabin of the vehicle.

12. The vehicle according to claim 10, wherein the one or more sensors are further configured to determine a rhythm of the detected tapping action, and the processing unit is configured to search for music corresponding to the tapping action base at least in part on the determined rhythm.

13. The vehicle of claim 12, wherein the processing unit is further configured to:
in response to that music matching the rhythm is searched out, use the matched music as the search result;
in response to that no music matching the rhythm is searched out, use music closest to the rhythm as the search result; or
in response to that no music matching the rhythm is searched out, not play any music.

14. The vehicle according to claim 13, wherein the one or more sensors are further configured to determine force of the detected tapping action, and the processing unit is configured to search for the music corresponding to the tapping action based at least in part on the rhythm and the force of the tapping action.

15. The vehicle of claim 12, wherein the multimedia system is further configured to play in any one of the following modes:
playing from the beginning of a complete media file of the music;
playing from the beginning of a segment corresponding to the rhythm tapped by the user; or
while the user continues to tap, playing from a music segment that the user is currently tapping.
